Europäisches Patentamt

European Patent Office

Office européen des brevets

(19)

(11)    EP 0 441 971 B2

(12)    NEW EUROPEAN PATENT SPECIFICATION

(45)    Date of publication and mention
of the opposition decision:
**18.04.2001  Bulletin 2001/16**

(45)    Mention of the grant of the patent:
**28.02.1996  Bulletin 1996/09**

(21)    Application number: **90912516.3**

(22)    Date of filing: **27.08.1990**

(51)    Int Cl.[7]: **A63B 49/02**, A63B 49/10,
A63B 53/00, A63B 59/00,
A63C 5/075, A01K 87/00

(86)    International application number:
**PCT/JP90/01084**

(87)    International publication number:
**WO 91/03284 (21.03.1991 Gazette 1991/07)**

(54)    **SPORTING GOODS AND SHOCK ABSORBING MATERIAL USED BY BEING FITTED TO THE SPORTING GOODS**

SPORTGUT UND SCHOCKABSORBIERENDES MATERIAL DARIN

ARTICLES DE SPORT ET MATERIAU AMORTISSANT LES CHOCS APPLIQUE SUR LES ARTICLES DE SPORT

(84)    Designated Contracting States:
**DE FR GB IT**

(30)    Priority:  **28.08.1989  JP  22063289
25.01.1990  JP  1585990
06.02.1990  JP  2643190**

(43)    Date of publication of application:
**21.08.1991  Bulletin 1991/34**

(73)    Proprietor: **TORAY INDUSTRIES, INC.
Tokyo 103-8666 (JP)**

(72)    Inventors:
• **YAMAGISHI, Masahiro
Shiga 525 (JP)**
• **HIJIRI, Masao
Aichi 444 (JP)**
• **KOMATSU, Yasuo
Shiga 520 (JP)**
• **EDAGAWA, Hiroshi
Shiga-gun Shiga 520-05 (JP)**

• **IMAEDA, Naoki
Shiga 520 (JP)**

(74)    Representative: **Coleiro, Raymond et al
MEWBURN ELLIS
York House
23 Kingsway
London WC2B 6HP (GB)**

(56)    References cited:
EP-A- 0 275 805            EP-A- 0 344 146
WO-A-85/01220             DE-A- 1 960 684
DE-A- 2 805 314           FR-A- 2 608 444
JP-A- 4 915 534           JP-A- 4 956 738
JP-A- 5 221 936           JP-A- 5 818 252
JP-A- 61 203 985          JP-A- 63 164 968
JP-A- 63 212 514          US-A- 4 212 461
US-A- 4 309 473           US-A- 4 627 635
US-A- 4 684 131

• **Journal of composite materials; volume 10, July
1976; pp 220-230**

EP 0 441 971 B2

**Description**

This invention relates to sports instruments with which the impact or vibration transmitted to the body especially the arm of a user when the instruments are used is largely reduced.

More particularly, this invention relates to sports instruments such as various rackets for tennis, racket ball and squash, golf clubs, fishing rods, bicycles and baseball bats, with which the impact transmitted to the users when the instruments are used can be reduced.

US-A-4875679 discloses a ball game racket, in particular, a tennis racket, having a part adapted to be gripped by the hand through which a force exerted by a ball and tending to vibrate the racket is transmitted to the arm of the user. The racket carries a vibration damping element positioned locally on, and on a relatively small surface of, the racket. The vibration damping element consists of a pair of plates of different respective materials, a first plate being of a viscoelastic material having a damping coefficient of at least 0.5 in a temperature range of 10 to 30°C and for frequencies of 0 to 1000 Hz, which first plate is glued by volcanization to a second plate of rigid material.

It is known to provide skis with a viscoelastic layer interposed between a rigid constructional upper face of a ski and the lower face of an upper stretch resistant constraining layer which may be of glass reinforced plastic, in order to clamp vibrations (see US-A-3537717). However, problems caused by a ball or other projectile not hitting the "sweet spot" of a sports instrument for propelling the ball are not addressed.

For example, by using a tennis racket of the present invention with which the impact or vibration generated when hitting a ball is largely reduced, the user (tennis player) can enjoy playing tennis without suffering from disorders such as "tennis elbow" which the tennis players are likely to be afflicted. Moreover, when the racket hits the ball, even if the so called "sweet spot" of the racket does not hit the ball, since the vibration transmitted, to the hand and the arm of the player is reduced, the player feels as if the sweet spot has hit the ball, so that the player can play tennis in comfort.

The present invention relates to sports instruments represented by the tennis rackets, with which the impact or vibration transmitted to the body of a user when the instrument is used is largely reduced, and to an impact-absorbing element forming part of the sports instruments.

Various sports are conventionally widely loved and sports instruments specifically adapted to each sport have been used. Various industrial materials have been developed and the new materials have been applied to the various sports instruments.

For example, recently, for tennis rackets, there has been a trend towards larger rackets or rackets with larger frames than before and especially those made of a material which is light but yet has a sufficient strength and rigidity have been increasingly used.

The frames of the conventional ordinary tennis rackets are made of wood, fiber-reinforced plastics (FRP) such as glass fiber-reinforced plastics and carbon fiber-reinforced plastics, or metals such as aluminum alloy. Recently, the percentage of those made of plastics, especially fiber-reinforced plastics (FRP) has sharply increased because of the developments in the molding technique, ease of production and of good reputation among the tennis players; see, for example, US-A-4212461.

Although the above-described materials used in the conventional rackets intrinsically have relatively good vibration-damping property, it is not sufficient for sharply and effectively damping the impact and vibration generated when a ball is hit.

US-A-4 684 131 discloses a tennis racquet, having a part adapted to be gripped by the hand, through which part and force, external of the user, and tending to vibrate the racquet, to which the racquet is subjected during use, is provided by a composite of a fibre reinforced resin with a sheet of vibration-reducing material.

Recently, a large number of people of a wide range of ages have enjoyed playing tennis as a light sport and people who have scarcely took part in sports have begun to play tennis. With the sharp increase in the population of tennis players, the number of tennis players suffering from disorders such as the so called "tennis elbow" which is a disorder of the elbow has also sharply increased.

It is thought that tennis elbow is caused by the impact and vibration generated when a ball is hit with the gut face of a racket, which is transmitted through the racket frame to the elbow of the player.

In particular, when a beginner or a moderate player who is not very good at playing tennis and who cannot properly hit the ball with the sweet spot continues to play tennis, unnaturally swinging a racket with a large frame made of a light material, the player tends to suffer from tennis elbow; the "sweet spot" is the central portion of the gut face - if the racket hits a ball with a portion other than the sweet spot, the racket causes a tingling sensation as the impact and vibration generated thereby are transmitted to the elbow .

Furthermore, even if tennis elbow is not caused, the impact and vibration generated by the vibration of the racket when hitting a ball transmitted to the hand, arm or elbow of the player prevents the player from enjoying a comfortable game with a sharp and proper hitting sensation. Furthermore, force is not properly and effectively transmitted to the ball when hitting a ball due to the generation of the impact and vibration, so that powerful and high level techniques cannot be performed. Thus, the fun of playing tennis is reduced by half.

Thus, the lighter the sensation from impact or vibration from the racket when hitting a ball, the better. Moreover, if the impact or vibration is light, even if a part of the racket somewhat away from the sweet spot hits the ball, the player feels as if the ball was hit with the sweet spot, so that even beginners can comfortably play tennis, in particular with a comfortable hitting sensation.

On the other hand, for the purpose of reducing the impact and vibration when hitting a ball, a so-called "stabilizer" has been proposed and is commercially available. The "stabilizer" is a molded article of rubber or soft synthetic resin, and is used by being inserted between adjacent guts or by being pressingly attached to the gut face. Although the "stabilizer" is effective for reducing the vibration of the gut per se, it does not serve to dampen effectively the vibration transmitted from the gut face to the body of the player via the frame.

As can be seen from the above description, it is highly desirable that the frame structure per se should be able to damp effectively the impact or vibration transmitted from the gut face to the body of the player through the frame when hitting a ball, and realization of such a racket has been highly desired provided that the frame structure does not render the overall weight of the racket too heavy or that the strength of the racket is not too low.

Now let's turn to other sports.

In most of the sports in which a sports instrument is handled, there is a problem caused by the transmission of the impact or the vibration generated by the playing.

For example, the problem that the impact or vibration caused by hitting a ball gives undesirable results also resides in playing golf. Generally, if a ball is hit with the sweet spot of the head portion of a golf club, the ball gains the maximum initial velocity and the flying direction of the ball is also stabilized. On the other hand, if a ball is hit with a portion outside the sweet spot, the club head is rotated about the center of gravity thereof, so that the initial velocity of the ball is decreased and so the flying distance of the ball is decreased accordingly. Furthermore, the direction in which the ball flies out is shifted, so the ball may fly in an undesirable direction.

To improve the flying distance and flying direction of the ball, several proposals have been made. That is, it has been proposed to adjust the weight distribution of the head portion of a golf club so as to adjust the position of the center of gravity of the head and to increase the moment of inertia of the head (Japanese Utility publication (Kokoku) No. 53-288). It was also proposed to change the horizontal and vertical lengths of the hitting area of the head portion of a golf club (Japanese Laid Open Utility Model Application (Kokai) Nos. 61-165762 and 63-192474). However, these proposals do not solve the problem of the impact or vibration caused by hitting a ball and do not solve the problem of the uncomfortable palsy feeling and accumulation of fatigue in the wrists, arms and elbows caused by the transmission of the impact and vibration generated when hitting a ball to the player.

Thus, there is a demand for a golf club shaft which can effectively dampen the impact and vibration.

To prevent efficiently the transmission of impact and vibration to the person handling a sports instrument through the sports instrument, or to damp effectively an external impact or vibration by means of the properties of the sports instrument is also desirable when using sports instruments other than tennis rackets and golf clubs. Examples of the such sports instruments include rackets other than for tennis such as for squash, badminton and the like, baseball bats, sticks for hockey, ice hockey, gate ball and the like, and bows and arrows for archery, Japanese archery and the like.

The present invention seeks to provide sports instruments with which the impact and vibration transmitted to the body through the arms of users when the instrument is used is largely reduced. Thus, the invention provides a sports instrument having a part adapted to be gripped by the hand, through which part any force, external of the user and tending to vibrate the instrument, to which the instrument is subjected during use, is transmitted to the arm of the user, a structural unit of which sports instrument is provided by a composite of a fiber reinforced resin with a sheet of a vibration-reducing material, characterised in that the sports instrument is moulded and the vibration-reducing material having a vibration loss coefficient of not less than 0.02 at room temperature.

Therefore, by the present invention, sports instruments are provided which per se serve to damp effectively the impact and vibration inevitably given to the sports instruments in use. Thus, sports instruments can be realized which give no adverse affects such as the above-mentioned tennis elbow to the body of the player, and with which the player can comfortably play the game fully enjoying the real fun of the sport

Thus, sports instruments which exhibit the above-mentioned effect are instruments which exhibit the above-mentioned effect are provided by employing a specific material as a part of the material of the sports instruments without changing the conventional outer appearance of the instruments.

The term "sports instrument" herein means any sports instruments as long as the effect of the present invention can be exhibited. Although not restricted, preferred examples of the sports instruments in the present invention include rackets for tennis, racket ball, squash and the like; fishing rods; bicydes (frames of bicycles): ball-hitting instruments such as baseball bats and sticks for hockey, ice hockey, gate ball and the like; and bows and arrows for archery, Japanese archery and the like.

Such sports instruments are those in which a vibration-reducing material having a vibration loss coefficient at room temperature of not less than 0.02 is used as at least a part of the material constituting the sports instruments.

BRIEF DESCRIPTION OF THE DRAWINGS

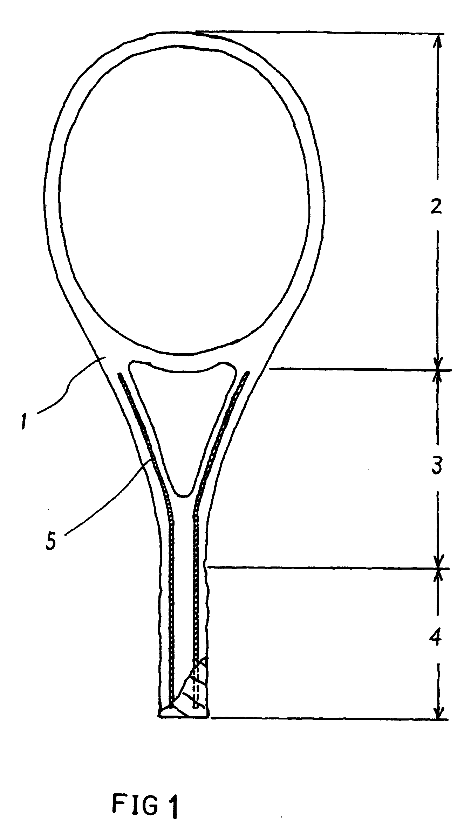

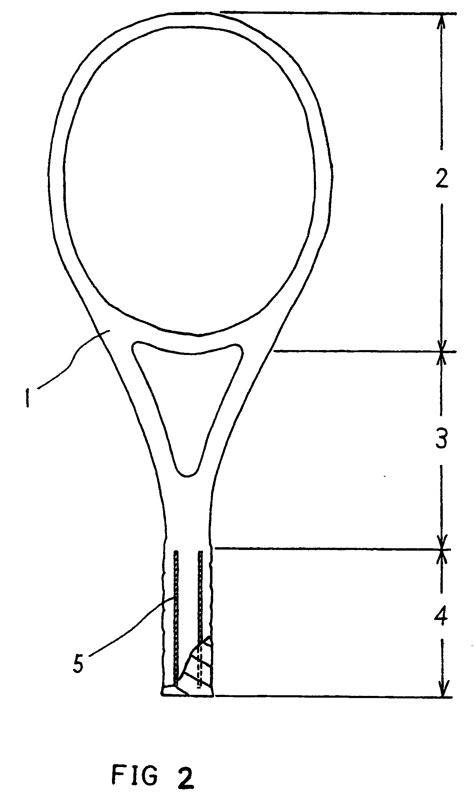

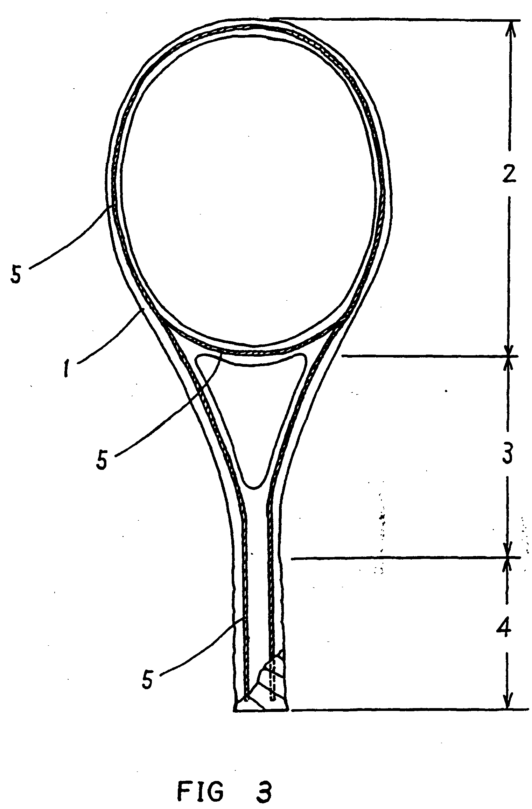

Figs. 1, 2 and 3 are schematic longitudinal sectional views showing tennis rackets as an example of the sports instrument according to the present invention, wherein the vibration-reducing material is used as a structural material while the outer appearance of the racket is the same as conventional rackets.

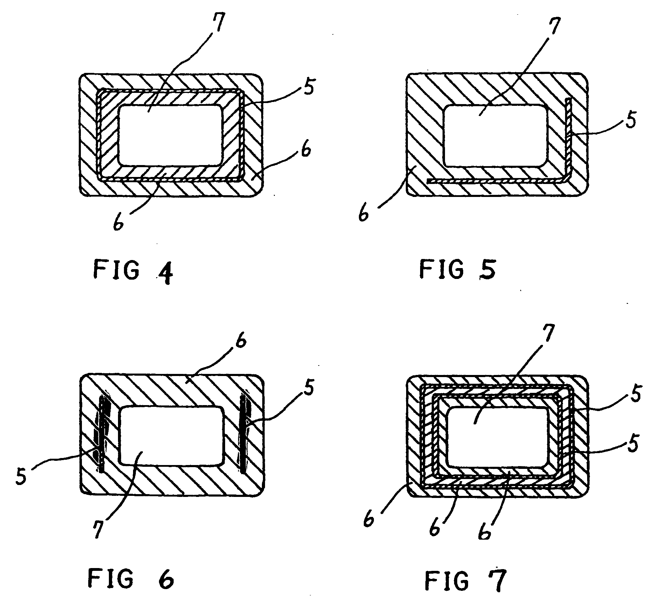

Figs. 4, 5, 6 and 7 are schematic cross sectional views showing various examples of using the vibration-reducing material in the sports instrument according to the present invention as shown in Figs. 1-3, wherein the vibration-reducing material is used in the sports instrument having the conventional outer appearance.

BEST MODE FOR CARRYING OUT THE INVENTION

The sports instrument and the impact-absorbing element of the present invention will now be described in more detail.

The sports instrument according to the present invention is one in which a vibration-reducing material having a specific vibration loss coefficient is used as at least a part of the material constituting the sports instrument. For example, as shown in Fig. 1, the sports instrument may be a tennis racket 1 comprising a frame portion 2, a throat portion 3 and a grip portion 4, and a vibration-reducing material 5 is used as a part of the material constituting the throat portion 3 and the grip portion 4. Fig. 2 shows an embodiment wherein the same vibration-reducing material 5 is used only in the grip portion 4. Fig. 3 shows an example wherein the vibration-reducing material 5 is used as a part of the material constituting the frame portion 2, grip portion 4 and the throat portion 3, that is, almost the entirety of the tennis racket 1.

In the present invention, the vibration-reducing material 5 may be employed in various ways. For example, the entire sports instrument is mainly composed of a fiber-reinforced resin and the vibration-reducing material 5, in the form of a sheet, is incorporated therein such that the vibration-reducing material 5 and the resin integrally form the entire sports instrument. The fiber-reinforcement may be carbon fibers and/or glass fibers. Those sports instruments in which the fiber-reinforced resin forms a layered structure are especially preferred. Among these, we find that those in which the fiber-reinforced resin layer is arranged adjacent to, or in the vicinity of the vibration-reducing material are preferred. Especially, those in which a prepreg containing carbon fibers therein is used as at least a part of the layer of the fiber-reinforced resin, and in which the prepreg is arranged adjacent to, or in the vicinity of the layer of the vibration-reducing material are preferred.

Figs. 4, 5, 6 and 7 are schematic cross sectional views which schematically show various examples of using the vibration-reducing material in sports instruments according to the present invention having their original shape as shown in Figs. 1 - 3. For example, schematic cross sectional views showing the frame portion, throat portion or the grip portion of the tennis racket are shown.

More particularly, Fig. 4 shows an embodiment in which a layer of the vibration-reducing material 5 is sandwiched between fiber-reinforced resin layers 6. Reference numeral 7 denotes a central space portion. Depending on the desired weight or strength of the sports instrument, the central space portion 7 may be hollow, packed with a foamed resin, or packed with an ordinary or a high density resin.

When it is desired to make the weight of the entire sports instrument as light as possible, a substantially hollow structure, that is, a structure in which the central space portion is hollow or packed with a very light material such as a foamed resin, is preferred.

Fig. 5 shows an embodiment wherein a layer of the vibration-reducing material 5 is present only in two adjacent sides of a rectangular section handle. Fig. 6 shows an embodiment wherein layers of the vibration-reducing material 5 are present only in two sides opposite each other.

Fig. 7 shows an embodiment wherein two layers of the vibration-reducing material 5 are sandwiched between the fiber-reinforced resin layers 6.

Needless to say, a single sports instrument may contain the structures shown in Figs. 4 - 7.

The structures shown in Figs. 4 - 7 may be formed by laminating the fiber-reinforced resin layers on the vibration-reducing material in the form of a sheet. The fiber-reinforced resin may preferably be a prepreg prepared by impregnating or coating the reinforcing fibers with a resin. Since such prepregs exhibit the stronger reinforcing effect along the running direction of the reinforcing fibers, by appropriately laminating the prepreg so as to arrange the reinforcing fibers in selected directions, the directions in which the reinforcing effect is exhibited can be well balanced.

Such prepregs constitute the main body of the sports instrument. For example, several layers of the prepreg may be wound about a core (hollow or solid metal rod or resin rod), and then a sheet of the vibration-reducing material may be wound thereon. If necessary, additional ply or plies of the prepreg may be wound thereon. The optional number of layers of the vibration-reducing material may be arranged in any part of the sports instrument other than the outermost surface of the sports instrument. It is not preferred to arrange the vibration-reducing material in the outermost surface in view of the strength and ease of molding.

An example of a process for producing the sports instrument of the present invention will now be described by describing an example of a method of such molding.

In one molding method, a rod containing the core rod prepared as mentioned above is heated as it is so as to accomplish the molding.

In another molding method, the above-described core rod is used as the core of the sports instrument as it is. In this case, the core is made of a material to be employed as the core of the sports instrument, and after preparing the wound body mentioned above, the wound body is inserted in a mold, followed by heating so as to carry out the molding. For example, about a core which may be a tube made of a synthetic resin such as Nylon, the prepreg, the vibration-reducing material and the prepreg are wound in the order mentioned, and the resulting wound body is inserted into a metal mold. The molding of the resulting structure may be attained by blowing compressed air into the tube simultaneously with heating so as to shape the tube in conformity with the shape of the metal mold.

In place of such a core material, synthetic resins which are foamed upon heating may be employed as the core material. In this case, after winding the core material with the prepreg and the vibration-reducing material, the molding may be accomplished by heating the resulting structure with or without using a mold so as to foam the resin.

In the present invention, as the vibration-reducing material having a vibration loss coefficient of not less than 0.02 at room temperature, metals with large specific gravities such as lead and copper, elastic rubbers and synthetic resins, as well as mixtures of a synthetic resin and inorganic fillers such as the above-described metals with large specific gravities, graphite, ferrite, mica and the like may be employed.

The metals with large specific gravities may be, for example, metal particles or metal fibers of lead, iron, copper and the like.

As the elastic rubbers, natural rubbers, styrene-butadiene rubbers, isoprene rubbers, chloroprene rubbers and the like may be employed.

As the synthetic resins, polyester resins, polyamide resins, polyvinyl chloride resins, polyvinyl acetate resins, epoxy resins and the like may be employed.

Among the vibration-reducing materials mentioned above, the elastic rubbers and the synthetic resins are preferred because they may easily be processed into various forms such as a laminate, plate, film, projection and the like and may readily be laminated or otherwise composited.

Furthermore, we found that compositions comprising an epoxy resin, polyamide resin and an organic filler are especially preferred as a vibration-reducing material because they excel in vibration-reducing property. Among these, it is very effective to use a thermally cured material of the following components (a), (b) and (c) as a major constituent:

(a) an epoxy resin which shows flowability at a temperature between room temperature and 100°C;
(b) a polyamide resin which shows flowability at a temperature between room temperature and 100°C; and
(c) an inorganic filler selected from graphite, ferrite and mica.

It should be noted that the phrase "which is fluid at a temperature between room temperature to 100°C" means that the resin can take the form of fluid at any temperature from room temperature to 100°C (e.g., the resin is fluid at 100°C).

Preferred examples of the epoxy resin (a) which is fluid at a temperature between room temperature and 100°C include those having at least two glycidyl ether groups, which, more preferably, have a viscosity of 1 - 300 poises at 25°C, epoxy equivalent of 100 - 500 and a molecular weight of 200 - 1000. Specific examples of the preferred epoxy resin include "Epicoat 828", "Epicoat 827", "Epicoat 834" and "Epicoat 807" (all of which are commercially available from Yuka Shell Kagaku Co., Ltd).

The polyamide resin (b) which is fluid at a temperature between room temperature to 100°C may preferably be one having a viscosity of 3 - 2000 poises at 25°C and an amine value of 100 - 800 because it effectively acts as a curing agent and as a plasticizer after curing. Specific examples of the preferred polyamide resin (b) include "Tomaide#225-X", "Tomaide#215-X", "Tomaide#225" (these are commercially available from Fuji Kasei Co., Ltd.), "Basamide 930", "Basamide 115" (these are commercially available from General Mills Co., Ltd.) and "Epon-V15" (commercially available from Shell Co., Ltd).

Although the polyamide resin (b) acts as a curing agent for the epoxy resin (a), to further accelerate and promote the curing, conventional curing agents for epoxy resins may be co-employed. Examples of such conventional curing agents include aliphatic amines such as triethyltetramine, propanolamine and aminoethylethanolamine; aromatic amines such as p-phenylenediamine, tris(dimethylamino)methylphenol and benzylmethylamine; and carboxylic acids such as phthalic anhydride and maleic anhydride. The amount of the curing agent to be added may appropriately be selected so as to carry out sufficiently the curing by taking the epoxy equivalent, amine equivalent and the acid equivalent thereof into consideration.

The inorganic filler (c) with which these resins are filled may preferably be at least one selected from graphite, ferrite and mica. Among these inorganic fillers, graphite is preferred because of the excellent vibration-reducing property achievable. In particular, graphite particles with an aspect ratio of 3 - 70 are preferred. The aspect ratio is the value obtained by dividing the diameter of the particle of graphite by its thickness. The graphites having an aspect ratio within the above-described range have good wetting and mixing properties with the resins.

The above-described components may preferably be blended in a mixing ratio as follows:

That is, the amount of the polyamide resin (b) may be 100 - 800 parts, preferably 200 - 500 parts with respect to 100 parts of the epoxy resin (a), and the amount of the inorganic filler (c) may be 30 - 120 parts, preferably 40 - 100 parts with respect to 100 parts of the total amount of the resins (in cases where the monoglycidyl ether is blended, the monoglycidyl ether is also included in the total amount of the resins).

To add a monoglycidyl ether compound to the resin composition described above is preferred because a vibration-reducing material which is very flexible and has good processability and which also has a great vibration-reducing property may be obtained. Preferred monoglycidyl ether compounds include those having an epoxy equivalent of 80 - 400 and a molecular weight of 80 - 400. Specific examples of the preferred monoglycidyl ether compounds include octadecylglycidyl ether, phenylglycidyl ether and butylphenylglycidyl ether.

The amount of the monoglycidyl ether compound to be added to the resin composition may preferably be 5 - 45 parts, more preferably 10 - 25 parts with respect to 100 parts of the epoxy resin.

The vibration-reducing materials to be employed in the present invention have a vibration loss coefficient of not less than 0.02, more preferably not less than 0.04 at room temperature, 20°C, in the frequency range of 50 Hz to 5 kHz.

The vibration loss coefficient referred to herein may be measured as follows:

That is, a sample resin (vibration-reducing agent) with a thickness of 10 mm is adhered to a steel plate of 5 mm thickness with a two-liquid type epoxy adhesive and the resultant sheet is left to stand for 24 hours. Thereafter, according to the U.S. Army Standard MIL-P-22581B, the vibration decay waveform is measured at room temperature (20°C), and the vibration loss coefficient ($\eta$) is calculated according to the equation below described. The measurement is repeated twice and the average is calculated.

a. Decay Rate

$$D_0 \text{ (dB/sec)} = (F/N) \cdot 20 \cdot \log(A_1/A_2)$$

b. Effective Decay Rate

$$De \text{ (dB/sec)} = D_0 - D_B$$

c. Percent Critical Damping

$$C/Cc \text{ (\%)} = (183 \times De)/F$$

wherein F represents the proper frequency of the sample-adhered plate, N represents the number of periods taken into the calculation, $A_1$ represents the maximum amplitude in N, $A_2$ represents the minimum amplitude in N, $D_0$ represents the decay rate of the sample-adhered plate, $D_B$ represents the decay rate of the original steel plate.

d. Vibration Loss Coefficient ($\eta$)

$$\eta = (C/Cc)/50$$

The above-described fiber-reinforced resin to be composited with the vibration-reducing material may preferably has a high strength and high rigidity sufficient as a structural material of the sports instrument. As the matrix resin of the fiber-reinforced resin, thermoplastic resins and thermosetting resins may be employed, while thermosetting resins are preferred in view of their high rigidity. The thermosetting resins which may be used include epoxy resins, unsaturated polyester resins, phenol resins, urea resins, melamine resins, diallylphthalate resins, urethane resins and polyimide resins as well as mixtures thereof. Among these, epoxy resins and unsaturated polyester resins are especially preferred.

The thermoplastic resins which may be used include polyamide resins, polyester resins, polycarbonate resins, ABS resins, polyvinyl chloride resins, polyacetal resins, polyacrylate resins, polystyrene resins, polyethylene resins, polyvinyl acetate resins and polyimide resins as well as mixtures thereof.

These fiber-reinforced resins are reinforced with reinforcing fibers such as inorganic fibers including metal fibers, carbon fibers and glass fibers, and synthetic fibers such as aramide fibers and other high tension synthetic fibers. The fibers may be used for reinforcement individually or in combination and may be long fibers, short fibers or mixtures thereof.

In a sports instrument embodying the present invention, the vibration-reducing material is generally employed in an amount of 1/5 - 1/100 % based on the total weight of the sports instrument. In the case of a tennis racket, although not restricted, the vibration-reducing material may preferably be employed in the amount of 1/7 - 1/80 % based on the total weight of the racket (including the gut).

If the transmission of the impact and the vibration is too much reduced, the sound of hitting a ball is also reduced accordingly, so that some players may not be satisfied with the feeling of hitting a ball. Thus, if a part of the transmission of the impact and vibration is desired to be reserved, the amount of the vibration-reducing material may be limited or the use of the vibration-reducing material may be restricted to only a limited portion of the sports instrument.

With the sports instrument according to the present invention mentioned above, the vibration-reducing material very effectively and sharply damps the impact and vibration, so that the fatigue of the arms, elbows, legs and the like as well as the disorders caused by the shocks may effectively be prevented.

Embodiments of the present invention will now be described in more detail with reference to the following Examples.

In the Examples, the apparent vibration loss coefficient of the each sports instrument was measured by the method as follows:

(1) Method for Measuring Apparent Vibration Loss Coefficients of Rackets

The sample racket according to the present invention is provided with a microacceleration pickup at the center of the grip portion. The tip of the frame is lightly hit with a hammer and the decay waveform of the generated vibration is measured with an FET analyzer (commercially available from Ono Sokuki Co., Ltd). The measured waveform is processed with a microcomputer and the vibration loss coefficient ($\eta$) was calculated according to MIL-P-22581B.

(2) Method for Measuring Apparent Vibration Loss Coefficients of Golf Clubs

A microacceleration pickup is mounted on the center of the grip portion of the sample golf club and the center of the head is lightly hit with a hammer. In the same manner as in the measurement of the vibration loss coefficients of rackets, the vibration loss coefficient is determined using the decay waveform.

Example 1

Epoxy resin-based prepregs containing 65% by weight of fibers including glass fibers made of E glass and carbon fibers at a weight ratio of 80:20, which prepregs had a weight per unit area of 350 g/m$^2$ were prepared. Two of the thus obtained prepregs were laminated such that the reinforcing fibers of each prepreg crossed at right angles to obtain a prepreg sheet. The thus obtained prepreg. sheet was used as the material constituting a racket.

On the other hand, a resin composition having the following composition was cast and cured to obtain a resin sheet of 0.2 mm thickness. The thus obtained sheet was used as the vibration-reducing material.

| | |
|---|---|
| Epoxy Resin (Epicoat#828, commercially available from Yuka Shell Co., Ltd.) | 16.3 parts |
| Octadecylglycidyl Ether | 3.2 parts |
| Polyamide Resin (Tomaid#225-X, commercially available from Fuji Kasei Co., Ltd) | 38.3 parts |
| Tris(dimethylamino)methylphenol | 2.2 parts |
| Graphite | 40.0 parts |

The vibration loss coefficient of this sheet at 20°C in the frequency range of 50 Hz to 5 kHz was 0.04.

The thus obtained resin sheet was cut to a rectangle of a size 25 x 800 mm. The weight of the sheet was 5.6 g.

The above-described prepreg sheet was cut to a rectangle of a size about 350 x 1600 mm and the cut sheet was wound about a tube made of Nylon film. In this case, the resin sheet was wound such that the resin sheet constituted the second layer from the outer surface and was arranged in the center of the tube so as to prepare a laminated tube.

Then the thus obtained laminated tube was placed in a tennis racket metal mold and the resultant composite was placed in a curing furnace. Upon softening of the resin, compressed air was blown into the Nylon tube and the resin was cured for 2 hours, followed by removal of the molded article from the metal mold.

The thus obtained molded article had a good outer appearance free from scabs and voids. After removing burrs and grinding the surface, a grip and gut were attached thereto to obtain a tennis racket.

The weight of this tennis racket was 355g. The apparent vibration loss coefficient of this racket at 20°C at a resonance frequency of 137.5 Hz was 0.022.

The feeling of hitting the ball with this racket was more comfortable than that with the commercially available rackets or the racket of the comparative example hereinbelow described because the impact and vibration transmitted to the wrist and elbow were smaller.

For comparison, a tennis racket having a conventional structure made of a fiber-reinforced resin was prepared in the same manner as in Example 1 except that the vibration-reducing sheet was not laminated (Comparative Example 1).

The weight of the racket was 349 g. The apparent vibration loss coefficient of this racket measured at 20°C under a resonance frequency of 142.5 Hz was 0.007. The feeling of hitting a ball with this racket was uncomfortable because the vibration transmitted to the wrist and elbow was large.

Examples 2 - 5, Comparative Example 2

As the vibration-reducing material, a resin sheet of 150 μm thickness was prepared from a resin composition having the following composition:

| | |
|---|---|
| Epoxy Resin (Epicoat#828, commercially available from Yuka Shell Co., Ltd.) | 13.6 parts |
| Octadecylglycidyl Ether | 2.7 parts |
| Polyamide Resin (Tomaid#225-X, commercially available from Fuji Kasei Co., Ltd) | 31.9 parts |
| Tris(dimethylamino)methylphenol | 1.8 parts |
| Graphite | 50.0 parts |

The vibration loss coefficient of the sample resin (vibration-reducing material) of this resin composition with a thickness of 10 mm was 0.04 at 20°C in the frequency range of 50 Hz to 5 kHz.

A prepreg in which bundles of carbon fibers each having a total fineness of 3300 deniers were arranged to attain a weight per unit area of 139 g/m$^2$ and an epoxy resin of a weight per unit area of 207 g/m$^2$ was coated thereon to obtain a prepreg. The prepreg was cut such that the fibers were biased to obtain a Prepreg A.

Another prepreg in which bundles of carbon fibers each having a total fineness of 3300 denier were arranged to attain a weight per unit area of 150 g/m$^2$ and an epoxy resin of a weight per unit area of 244 g/m$^2$ was coated thereon to obtain a prepreg. The prepreg was cut to a short length such that the direction of the fibers was straight to obtain Prepreg B.

Six plies of the Prepreg A were wound about a core which was a steel rod to which a fluorine-containing releasing agent had been preliminarily applied, and one ply of the above-described resin sheet which was the vibration-reducing material and four plies of Prepreg B were wound thereon to obtain a laminate (Example 2).

On the other hand, a laminate was prepared by winding the resin sheet which was the vibration-reducing material as a first ply about the same core as mentioned above, winding six plies of Prepreg A thereon and winding four plies of Prepreg B thereon (Example 3).

In addition, a laminate was prepared by winding six plies of Prepreg A about the core, winding thereon four plies of Prepreg B and finally winding thereon the resin sheet which was the vibration-reducing material (Example 4).

In addition, a laminate was prepared by winding six plies of Prepreg A about the core, winding thereon two plies of Prepreg B, winding thereon one ply of the resin sheet which was the vibration-reducing material and finally winding two plies of Prepreg B (Example 5).

For comparison, a laminate was prepared by winding six plies of Prepreg A and by winding thereon four plies of Prepreg B (Comparative Example 2).

The above-described five kinds of laminate were placed in a thermostatic bath of high temperature type and were heated at 135°C for 2 hours so as to cure and mold the resin. The metal rods were withdrawn from the molded article to obtain five materials for golf club shafts.

The apparent vibration loss coefficients of the materials for golf club shafts are shown in Table 1.

The apparent vibration loss coefficients were those measured at 20°C at a resonance frequency of 250 Hz.

Table 1

| | Apparent Vibration Loss Coefficient |
|---|---|
| Example 2 | 0.014 |

Table 1   (continued)

|  | Apparent Vibration Loss Coefficient |
|---|---|
| Example 3 | 0.013 |
| Example 4 | 0.015 |
| Example 5 | 0.034 |
| Comparative Example 2 | 0.002 |

As can be seen from these results, the materials of Examples 2 - 5, especially that of Example 5 showed excellent impact and vibration-reducing effect.

As is evident from the above the present invention provides sports instruments with which the impact or vibration transmitted to the body through the arms of a user when the instrument is used is largely reduced. Thus, disorders caused by sports such as tennis elbow can be prevented and the sports can be enjoyed.

**Claims**

1.   A sports instrument having a part adapted to be gripped by the hand, through which part any force, external of the user and tending to vibrate the instrument, to which the instrument is subjected during use, is transmitted to the arm of the user, a structural unit of which sports instrument is provided by a composite of a fiber reinforced resin with a sheet of vibration-reducing material, characterised in that the sports instrument is moulded and the vibration-reducing material is a thermally cured material having a vibration loss coefficient of not less than 0.02 at room temperature.

2.   A sports instrument according to Claim 1, which is designed to hit an object.

3.   A sports instrument according to Claim 1 or Claim 2 wherein the thermally cured material comprises as a major constituent:

   (a) an epoxy resin which shows flowability at a temperature between room temperature and 100°C;
   (b) a polyamide resin which shows flowability at a temperature between room temperature and 100°C; and
   (c) an inorganic filler selected from graphite, ferrite and mica.

4.   A sports instrument according to any preceding claim, wherein the structural unit is composed of a moulded prepreg of the fiber reinforced resin.

5.   A sports instrument according to claim 4, wherein the reinforcing fibers are provided at least partly by carton fibers.

6.   A sports instrument according to any preceding claim, wherein the composite defines a substantially hollow said structural unit of the sports instrument.

7.   A sports instrument according to any preceding claim, wherein the fiber-reinforced resin is a thermosetting resin.

8.   A sports instrument according to claim 7, wherein the thermosetting resin is an epoxy resin.

9.   A sports instrument according to claim 7, wherein the thermosetting resin is an unsaturated polyester resin.

10.   A sports instrument according to any one of claims 2 to 9, which is designed for hitting a ball.

11.   A sports instrument according to claim 10, wherein the sports instrument is a racket.

12.   A sports instrument according to claim 11, wherein the sports instrument is a tennis racket.

13.   A sports instrument according to any one of claims 2 to 9, wherein the said sports instrument is a golf club.

14.   A sports instrument according to any one of claims 2 to 9, wherein the sports instrument is a fishing rod.

**15.** A sports instrument according to any one of claims 2 to 9, wherein the sports instument is a bicycle.

**Patentansprüche**

**1.** Sportgerät mit einem Teil, der ausgebildet ist, von der Hand gefaßt zu werden, durch welchen Teil jegliche Kraft außerhalb des Benutzers, die dazu neigt, das Gerät in Schwingung zu versetzen und der das Gerät während der Verwendung ausgesetzt ist, auf den Arm des Benutzers übertragen wird, wobei eine Struktureinheit des Sportgeräts durch einen Verbundkörper eines faserverstärkten Harzes mit einer Lage eines schwingungsdämpfenden Materials gebildet wird, dadurch gekennzeichnet, daß das Sportgerät geformt ist und das schwingungsverringernde Material ein wärmegehärtetes Material mit einem Vibrationsverlustkoeffizienten von zumindest 0,02 bei Raumtemperatur ist.

**2.** Sportgerät nach Anspruch 1, das zum Schlagen eines Gegenstands dient.

**3.** Sportgerät nach Anspruch 1 oder Anspruch 2, worin das schwingungsdämpfende Material ein wärmegehärtetes Material ist, das folgende Hauptbestandteile besitzt:

(a) ein Epoxyharz, das bei einer Temperatur zwischen Raumtemperatur und 100°C Fließfähigkeit aufweist;

(b) ein Polyamidharz, das bei einer Temperatur zwischen Raumtemperatur und 100°C Fließfähigkeit aufweist;

(c) einen anorganischen Füller, der aus Graphit, Ferrit und Glimmer ausgewählt ist.

**4.** Sportgerät nach einem der vorhergehenden Ansprüche, worin die Struktureinheit aus einem geformten Prepreg des faserverstärkten Harzes besteht.

**5.** Sportgerät nach Anspruch 4, worin die Verstärkungsfasern zumindest teilweise durch Kohlenstoffasern gebildet sind.

**6.** Sportgerät nach einem der vorhergehenden Ansprüche, worin der Verbundkörper eine im wesentlichen hohle Struktureinheit des Sportgeräts definiert.

**7.** Sportgerät nach einem der vorhergehenden Ansprüche, worin das faserverstärkte Harz ein wärmeaushärtendes Harz ist.

**8.** Sportgerät nach Anspruch 7, worin das wärmeaushärtende Harz ein Epoxyharz ist.

**9.** Sportgerät nach Anspruch 7, worin das wärmeaushärtende Harz ein ungesättigtes Polyesterharz ist.

**10.** Sportgerät nach einem der Ansprüche 2 bis 9, das für das Schlagen eines Balls ausgebildet ist.

**11.** Sportgerät nach Anspruch 10, worin das Sportgerät ein Schläger ist.

**12.** Sportgerät nach Anspruch 11, worin das Sportgerät ein Tennisschläger ist.

**13.** Sportgerät nach einem der Ansprüche 2 bis 9, worin das Sportgerät ein Golfschläger ist.

**14.** Sportgerät nach einem der Ansprüche 2 bis 9, worin das Sportgerät eine Angelrute ist.

**15.** Sportgerät nach einem der Ansprüche 2 bis 9, worin das Sportgerät ein Fahrrad ist.

**Revendications**

**1.** Instrument de sport comportant une partie conçue pour être saisie par la main, à travers cette partie toute force, extérieure à l'utilisateur et ayant tendance à faire vibrer l'instrument, à laquelle l'instrument est soumis pendant l'utilisation, est transmise au bras de l'utilisateur, une unité structurelle dudit instrument de sport étant réalisée par

**EP 0 441 971 B2**

un composite d'une résine renforcée par des fibres avec une feuille en matériau réducteur de vibrations, caractérisé en ce que l'instrument de sport est moulé et que le matériau réducteur de vibrations est un matériau durci thermiquement ayant un coefficient de perte de vibrations qui n'est pas inférieur à 0,02 à température ambiante.

2. Instrument de sport selon la revendication 1, qui est conçu pour frapper un objet.

3. Instrument de sport selon la revendication 1 ou la revendication 2, dans lequel le matériau durci thermiquement comprend comme constituant majeur:

   (a) une résine époxy qui a une fluidité à une température entre la température ambiante et 100°C;
   (b) une résine polyamide qui a une fluidité à une température entre la température ambiante et 100°C; et
   (c) une charge inorganique choisie parmi le graphite, le ferrite et le mica.

4. Instrument de sport selon l'une des revendications précédentes, dans lequel l'unité structurelle est constituée d'un pré-imprégné moulé de la résine renforcée par des fibres.

5. Instrument de sport selon la revendication 4, dans lequel les fibres de renforcement sont réalisées au moins partiellement par des fibres de carbone.

6. Instrument de sport selon l'une des revendications précédentes, dans lequel le composite définit une unité structurelle sensiblement creuse de l'instrument de sport.

7. Instrument de sport selon l'une des revendications précédentes, dans lequel la résine renforcée par des fibres est une résine thermodurcissable.

8. Instrument de sport selon la revendication 7, dans lequel la résine thermodurcissable est une résine époxy.

9. Instrument de sport selon la revendication 7, dans lequel la résine thermodurcissable est une résine polyester non saturée.

10. Instrument de sport selon l'une des revendications 2 à 9, qui est conçu pour frapper une balle.

11. Instrument de sport selon la revendication 10, dans lequel l'instrument de sport est une raquette.

12. Instrument de sport selon la revendication 11, dans lequel l'instrument de sport est une raquette de tennis.

13. Instrument de sport selon l'une des revendications 2 à 9, dans lequel ledit instrument de sport est un club de golf.

14. Instrument de sport selon l'une des revendications 2 à 9, dans lequel l'instrument de sport est une canne à pêche.

15. Instrument de sport selon l'une des revendications 2 à 9, dans lequel l'instrument de sport est une bicyclette.

FIG 1

FIG 2

FIG 3

FIG 4

FIG 5

FIG 6

FIG 7